(19) Europäisches Patentamt
European Patent Office
Office européen des brevets

(11) **EP 2 398 143 B1**

(12) **EUROPÄISCHE PATENTSCHRIFT**

(45) Veröffentlichungstag und Bekanntmachung des Hinweises auf die Patenterteilung:
**18.08.2021   Patentblatt 2021/33**

(51) Int Cl.:
*H02P 6/14* *(2016.01)*          *H02P 21/00* *(2016.01)*
*H02P 6/15* *(2016.01)*

(21) Anmeldenummer: **11004938.4**

(22) Anmeldetag: **16.06.2011**

(54) **Verfahren und Vorrichtung zur Überwachung einer bewegungsgesteuerten Maschine mit einem elektronisch kommutierten Antriebsmotor**

Method and device for monitoring a machine controlled by movement with an electronically commuted drive motor

Procédé et dispositif de surveillance d'une machine commandée par déplacement dotée d'un moteur d'entraînement commuté électroniquement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2010   DE 102010024238**

(43) Veröffentlichungstag der Anmeldung:
**21.12.2011   Patentblatt 2011/51**

(73) Patentinhaber: **KUKA Deutschland GmbH**
**86165 Augsburg (DE)**

(72) Erfinder:
• **Bonin, Uwe**
**86316 Friedberg (DE)**

• **Hofmann, Josef**
**86709 Wolferstadt (DE)**

(74) Vertreter: **Schlotter, Alexander Carolus Paul et al**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**EP-A1- 1 657 810     EP-A2- 1 589 653**
**US-A- 6 092 004**

EP 2 398 143 B1

**Beschreibung**

Die vorliegende Erfindung betrifft ein Verfahren und eine Vorrichtung zur Überwachung einer bewegungsgesteuerten Maschine, insbesondere eines Roboters, mit einem elektronisch kommutierten Antriebsmotor, dessen Ist-Position erfasst wird und für den ein Kommutierungswinkel auf Basis seiner erfassten Ist-Position und einer Steuergröße, insbesondere einer vorgegebenen Soll-Position, vorgegeben wird.

Maschine mit einer Bewegungssteuerung, i.e. einer durch eine Steuerung vorgegebenen Bewegung, wie insbesondere ein- oder mehrachsige Roboter, weisen häufig einen oder mehrere Servoantriebe auf, die auf die jeweiligen Bewegungsachsen wirken.

Solche Servoantriebe umfassen einen elektronisch kommutierten Elektromotor, beispielsweise einen permanenterregten Synchronmotor, sowie einen Umrichter zur Erzeugung eines drehenden Statorfeldes, dem der permanenterregte Rotor folgt und so ein gewünschtes Drehmoment bzw. eine gewünschte Achsposition liefert. Hierzu wird der Kommutierungswinkel vorgegeben, der die Orientierung des drehenden Statorfeldes bestimmt. Er hängt unter anderem von der Ist-Position des Rotors, i.e. dessen Orientierung ab, die beispielsweise über Hall-Sensoren oder die Induktion in stromlosen Statorwicklungen erfasst werden kann. Zum Beispiel aus der EP 1 734 648 A1, DE 103 30 551 B4 und DE 10 2007 040 560 A1 sind Ansteuerungen elektronisch kommutierter Elektromotoren unter Vorgabe eines Winkels für das Statorfeld bekannt.

Die Servoelektronik, die dies durchführt und die Statorwicklungen in der erforderlichen Weise bestromt, wird von einer übergeordneten Maschinensteuerung angesteuert, die auf Basis der Bewegungssteuerung für die Maschine eine Steuergröße für den Antriebsmotor vorgibt. Beispielsweise kann eine Robotersteuerung getaktet neue Soll-Winkellagen für die Antriebsmotoren eines Roboters vorgeben, um programmierte Soll-Posen abzufahren.

Insbesondere bei Manipulatoren wie etwa Industrierobotern soll sichergestellt werden, dass sie beispielsweise vorgegebene Geschwindigkeitsbegrenzungen einzelner Achsen oder eines Referenzpunktes wie des TCPs ("Toll Center Point") nicht überschreiten. Dies wird heute durch entsprechende Geschwindigkeitsüberwachungen in der Robotersteuerung sichergestellt, die Ist-Positionen oder -Geschwindigkeiten erfasst, diese - gegebenenfalls nach entsprechender Zeitdifferenzierung - mit vorgegebenen Geschwindigkeitsbegrenzungen vergleicht und bei Überschreiten der Begrenzungen Fehlerreaktionen auslöst, etwa den Roboter sicher stillsetzt.

Nachteilig bedingt diese Überwachung in der übergeordneten Robotersteuerung sich kumulierende Reaktionszeiten zwischen dem Überschreiten einer Geschwindigkeitsbegrenzungen und der entsprechenden Reaktion, so dass es insbesondere zu einem unerwünschtem Nachlauf des Roboters kommt, dem beispielsweise mit entsprechend vergrößerten Schutzräumen Rechnung getragen werden muss.

Aufgabe der vorliegenden Erfindung ist es, eine verbesserte Überwachung einer bewegungsgesteuerten Maschine wie beispielsweise eines Manipulators, insbesondere eines Roboters, zur Verfügung zu stellen.

Aus der EP 1 589 653 A2 ist eine Vorrichtung zum Betrieb eines Synchronmotors bekannt, die eine erste Überwachungseinrichtung zur Überprüfung eines Grenzwertes der Geschwindigkeit des Synchronmotors und eine zweite Überwachungseinrichtung zur Überprüfung eines Grenzwertes des Kommutierungswinkels des Synchronmotors oder dessen zeitlicher Änderung aufweist, mittels der in einer Ausführung die Änderung des Kommutierungswinkels pro Zeiteinheit auf einen entsprechenden Wert begrenzt wird.

Diese Aufgabe wird durch ein Verfahren mit den Merkmalen des Anspruchs 1 gelöst. Anspruch 6 stellt eine Vorrichtung, Anspruch 8 ein Computerprogrammprodukt, insbesondere einen Datenträger bzw. ein maschinenlesbares Speichermedium, zur Durchführung eines erfindungsgemäßen Verfahrens unter Schutz. Die Unteransprüche betreffen vorteilhafte Weiterbildungen.

Erfindungsgemäß wird die Tatsache genutzt, dass bei einem elektronisch kommutierten Antriebsmotor die von ihm abgegebene Antriebskraft unter anderem von dem vorgegebenen Kommutierungswinkel abhängt.

Wird also der Kommutierungswinkel derart vorgegeben, dass eine Änderungsrate des Kommutierungswinkels einen Grenzwert nicht überschreitet, so reduziert sich bei einem Überschreiten dieses Grenzwertes die die Maschine aktuierende Antriebskraft des Antriebsmotors automatisch, gegebenenfalls bis auf Null oder sogar darüber hinaus auf eine rückstellende Bremskraft. Dies kann zudem in einer Antriebssteuerung rascher erfolgen als in einer übergeordnete Maschinensteuerung, so dass vorteilhafterweise unerwünschte Reaktionsverzögerungen bzw. Nachlaufwege reduziert werden können.

Auf der anderen Seite kann der Antriebsmotor vorteilhafterweise die volle Antriebskraft, beispielsweise ein Motorsollmoment, zur Verfügung stellen, solange die Änderungsrate den Grenzwert nicht überschreitet. Dies ist insbesondere bei Robotermanipulationen in eng begrenzten, sensiblen Arbeitsräumen von Vorteil wie sie beispielsweise bei Medizinrobotern, insbesondere chirurgischen Robotern auftreten.

So kann zum Beispiel ein kommandiertes, von den Antriebsmotoren geleistetes Überschreiten eines Geschwindigkeits- oder Beschleunigungsgrenzwertes durch entsprechende Vorgabe eines Grenzwertes für die Kommutirungswinkelgeschwindigkeit zw. -beschleunigung verhindert werden, während innerhalb der zulässigen Grenzwerte die vollen Antriebskräfte zur Verfügung stehen.

Gemäß einer bevorzugten Ausführung der vorliegenden Erfindung gibt zur Bewegungssteuerung einer Maschine, insbesondere eines ein- oder mehrachsigen Manipulators, vorzugsweise eines Roboters, eine übergeordnete Maschinensteuerung Steuergrößen für deren Antriebsmotor vor. Dabei wird vorliegend zur kompakteren Darstellung auch eine Regelung, i.e. die Ausgabe von Stellgrößen auf Basis vorgegebener Soll- und erfasster Ist-Größen, verallgemeinernd als Steuerung bezeichnet.

Beispielsweise kann eine Robotersteuerung aus einer vorab geteachten Bahn getaktet neue Soll-Posen des Roboters ermitteln und entsprechende Soll-Positionen, etwa Soll-Drehwinkel der Gelenke eines Knickarmroboters oder Soll-Stellungen von Linearmotoren eines Portalroboters, bestimmen. Gleichermaßen kann eine Kraftregelung, beispielsweise modellgestützt, Soll-Antriebskräfte vorgeben, wobei zur kompakteren Darstellung auch ein antiparalleles Kräftepaar, i.e. ein Drehmoment, verallgemeinernd als Kraft bezeichnet wird. Stell- bzw. Steuergrößen können beispielsweise absolut oder als Differenz zu einem Ist-Wert, vorgegeben werden.

Auf Basis vorgegebener Steuergrößen und einer erfassten Ist-Position für einen Antriebsmotor gibt in einer bevorzugten Ausführung eine Motorsteuerung ein Rotorfeld vor, beispielsweise Soll-Werte für die Stromkomponenten $I_d$ ("direct", i.e. in Richtung des Rotormagnetfeldes) und $I_q$ ("quadrature", i.e. senkrecht hierzu) in Feldkoordinaten des Rotors des Antriebsmotors.

Um diese zu bewirken, kann eine Stromsteuerung ein Statorfeld vorgeben, beispielsweise Soll-Werte für die Stromkomponenten $I_a$, $I_b$ in (ggfs. virtuellen) Wicklungen eines Stators. Diese können durch einen Umrichter, insbesondere pulsweitenmoduliert, realisiert werden.

Insbesondere ein Winkel der Orientierung eines solchen Statorfeldes relativ zu einem inertialen, beispielsweise statorfesten, Bezugssystem wird als Kommutierungswinkel bezeichnet.

Bei einer bevorzugten Ausführung als permanenterregter Synchronmaschine läuft der permanenterregte Rotor mit dem mit diesem Kommutierungswinkel umlaufenden Statordrehfeld mit, so dass durch eine erfindungsgemäße Begrenzung einer Änderungsrate des Kommutierungswinkels wie vorstehend erläutert die aktuierte, durch den Antriebsmotor getriebene, Bewegung auf eine vorgegeben Änderungsrate begrenzt werden kann, oberhalb der der Antriebsmotor nur noch geringer, vorzugsweise gar nicht mehr beschleunigend und besonders bevorzugt sogar bremsend wirkt.

Entsprechend wird erfindungsgemäß zur Überwachung, beispielsweise vorab oder während des Betriebs durch die Maschinensteuerung, ein fester oder variabler Grenzwert für eine Änderungsrate der Ist-Position des Antriebesmotors vorgegeben. Eine solche Änderungsrate kann insbesondere eine Änderung der Ist-Position über der Zeit, i.e. eine Geschwindigkeit, und/oder eine Zeitableitung hiervon, zum Beispiel eine Beschleunigung sein. Sie kann sich beispielsweise durch Rücktransformation auf Gelenkwinkelebene aus einer vorgegebenen kartesischen Maximalgeschwindigkeit des TCPs oder aber durch direkte Vorgabe von Antriebsmotorgeschwindigkeiten, - beschleunigungen, -rucken und dergleichen ergeben.

Aus diesem Grenzwert für die Änderungsrate der Ist-Position des Antriebesmotors kann, wiederum beispielsweise vorab oder während des Betriebs, ein Grenzwert für eine entsprechende Änderungsrate des Kommutierungswinkels bestimmt werden. Dieser kann beispielsweise proportional zum Änderungsratengrenzwert für die Ist-Position des Antriebesmotors sein, wobei ein Proportionalitätsfaktor insbesondere eine Polpaarzahl des Antriebsmotors sein oder diese als multiplikativen Faktor enthalten kann.

Erfindungsgemäß wird nun der Kommutierungswinkel derart vorgegeben, dass ein hierfür beispielsweise wie vorstehend erläutert vorgegebener Änderungsratengrenzwert nicht überschritten wird. Insbesondere kann somit ein Grenzwert für eine Kommutierungswinkelgeschwindigkeit, mit der ein Statordrehfeld umläuft, eine Kommutierungswinkelbeschleunigung, einen Kommutierungswinkelruck und/oder höhere Zeitableitungen vorgegeben werden.

In einer bevorzugten Ausführung wird auf Basis der erfassten Antriebsmotor-Ist-Position und der vorgegebenen Steuergröße ein Steuer-Kommutierungswinkel oder eine Steuer-Kommutierungswinkeländerung derart bestimmt, dass die vorgegebene Steuergröße erreicht wird. Beispielsweise kann bei einer kommandierten neuen Antriebsmotorwinkel-Soll-Position bzw. einer kommandierten Soll-Antriebsmotorwinkeländerung mit vorgegebenem Sollantriebsmotorkraft der zugehörige Kommutierungswinkel bzw. die zugehörige Kommutierungswinkeländerung bestimmt werden.

In der bevorzugten Ausführung wird dieser Steuer-Kommutierungswinkel nur dann als im Antriebsmotor zu realisierender Kommutierungswinkel vorgegeben bzw. dieser aufgrund der Steuer-Kommutierungswinkeländerung vorgegeben, wenn die Änderung gegenüber dem aktuellen Ist- Kommutierungswinkel den Grenzwert für die Änderungsrate nicht überschreitet.

Überschreitet hingegen die Änderung bzw. Änderungsrate bei Umsetzung des auf Basis der kommandierten Steuergröße bestimmten Steuer-Kommutierungswinkel bzw. der auf Basis der kommandierten Steuergröße bestimmten Steuer-Kommutierungswinkeländerung den Grenzwert, so kann in einer bevorzugten Ausführung stattdessen ein konstanter Kommutierungswinkel vorgeben werden.

Vorteilhaft kann dies eine positionsabhängige Pendelkraft zwischen einer Soll-Antriebskraft und ihrem Negativwert bewirken.

Gleichermaßen kann ein Kommutierungswinkel vorgeben werden, der gegenüber der erfassten Antriebsmotor-Ist-Position um einen vorgegeben, insbesondere konstanten Wert verschoben ist. Die Verschiebung kann vorteilhaft derart gewählt werden, dass der Antriebsmotor der Bewegung bremsend entgegenwirken.

Ein Kommutierungswinkel kann alternativ auch auf Basis eines Ist-Kommutierungswinkels und eines zulässigen Maximaländerungswertes für den Kommutierungswinkel vorgeben werden, so dass eine Änderungsrate des Kommutierungswinkels auf diesen Maximaländerungswert begrenzt ist. Vorteilhaft kann dies ebenfalls eine Pendelkraft zwischen einer Soll-Antriebskraft und ihrem Negativwert bewirken.

Neben dem Kommutierungswinkel kann, insbesondere durch Vorgabe der Amplitude der Stromkomponente $I_q$, auch die Soll-Antriebskraft des Antriebsmotors, bei einem Drehmotor entsprechend sein Drehmoment, vorgegeben werden. In einer bevorzugten Ausführung der vorliegenden Erfindung wird diese Amplitude konstant vorgegeben.

Weitere Vorteile und Merkmale ergeben sich aus den Unteransprüchen und den Ausführungsbeispielen. Hierzu zeigt, teilweise schematisiert:

Fig. 1:    einen Knickarmroboter; und

Fig. 2:    eine Steuerung des Knickarmroboters mit einer Vorrichtung zur Überwachung nach einer Ausführung der vorliegenden Erfindung.

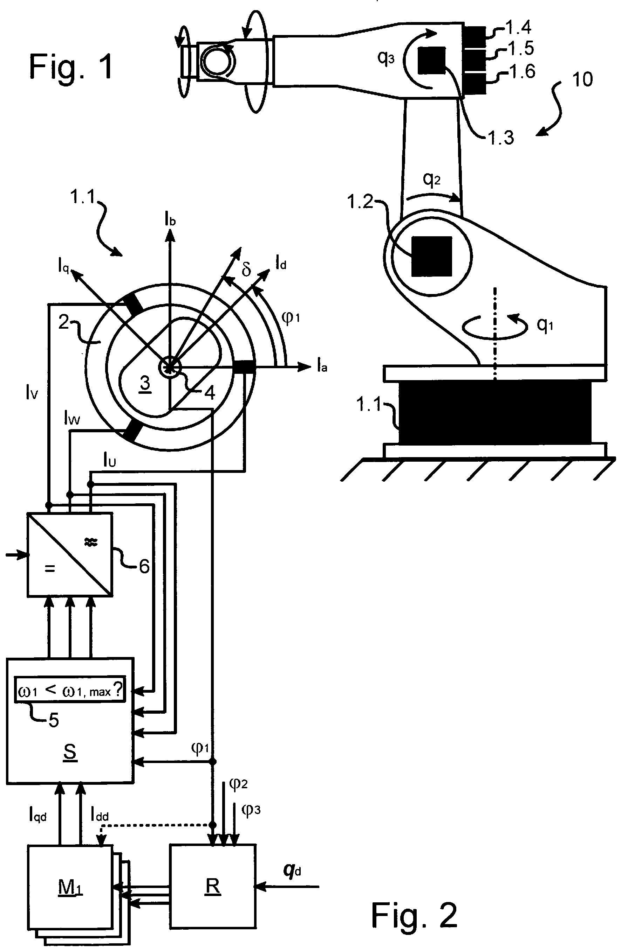

Fig. 1 zeigt einen sechsachsigen Knickarmroboter 10 mit schwarz symbolisierten Antriebsmotoren in Form permanentmagneterregter Synchronmotoren 1.1,...1.6, die Bewegungsachsen aktuieren, deren Positionen $q_1$, $q_2$,... die Pose des Roboters 10 bestimmen.

Fig. 2 zeigt einen solchen Antriebsmotor 1.1 mit einem Stator 2, der drei Wicklungen mit den Strömen $I_U$, $I_V$ und $I_W$ aufweist, und einem permanentmagneterregten Rotor 3, dessen Rotormagnetfeldorientierung gegenüber dem Stator 2 durch den Rotorwinkel $\varphi_1$ beschrieben wird. Rotor- und Achswinkel $\varphi$, q können entsprechend einer Getriebeübersetzung, gegebenenfalls modellgestützt unter Berücksichtigung einer Elastizität des Getriebes, ineinander transformiert werden.

Eine Robotersteuerung R erhält zum einen, beispielsweise aus einer Bahnplanung, Soll-Positionen $q_d$ = (q $_{1d}$,..., q $_{6d}$) und zum anderen, beispielsweise mittels Hall-Sensoren, Encodern oder Resolvern 4, oder sensorlos durch Auswertung einer Induktion in jeweils stromlosen Statorwicklungen der Antriebsmotoren, Antriebs-Ist-Positionen $\varphi_1$, $\varphi_2$, ... bzw. Achs-Ist-Positionen $q_1$, $q_2$, ... und bestimmt hieraus Steuergrößen, beispielsweise Soll-Winkeländerungen $\Delta\varphi_{1d}$, $\Delta\varphi_{2d}$,... der einzelnen Antriebsmotoren und gibt diese an Motorsteuerungen M für die verschiedenen Antriebsmotoren 1.1, 1.2,... aus.

Die Motorsteuerungen M bestimmen hieraus für ein konstant vorgegebenes Antriebsmotordrehmoment $\tau_d$ jeweils eine Soll-Bestromung $I_{qd}$, $I_{dd}$ in einem mit dem Rotor 3 drehenden Bezugssystem, beispielsweise auf Basis eines Proportional-Integral-Regelgesetzes. Gleichermaßen kann beispielsweise auch die Robotersteuerung R, etwa durch entsprechende Rückwärtstransformation einer vorgegebenen kartesischen Lage und Orientierung des TCPs des Roboters 10, neue Soll-Winkel $\varphi_{1d}$, $\varphi_{2d}$,... für die Antriebsmotoren vorgeben und die Motorsteuerungen M hieraus unter Berücksichtigung der Antriebs-Ist-Positionen $\varphi_1$, $\varphi_2$, ... wiederum Soll-Bestromungen $I_{qd}$, $I_{dd}$, bestimmen, vereinfacht beispielsweise gemäß $I_{qd}$ = P $\times$ $\Delta\varphi_d$ mit einem Proportionalitätsfaktor P (vgl. die gestrichelte Übertragung von Antriebs-Ist-Positionen $\varphi_1$ in Fig. 2).

Eine Stromsteuerung S bestimmt mittels einer Clarke-Park-Transformation aus der Soll-Bestromung $I_{qd}$, $I_{dd}$ in dem mit dem Rotor 3 drehenden Bezugssystem eine Soll-Bestromung $I_{ad}$, $I_{bd}$ in einem virtuellen statorfesten Bezugssystem. In diesem ist das Statormagnetfeld, das zur Realisierung der kommandierten Positionsänderung gemäß Motorsteuerung M anzulegen ist, um den Steuer-Kommutierungswinkel $\delta$ gegenüber einer Bezugsorientierung verdreht, die beispielsweise einmalig vorab mittels "Wake&Shake" ermittelt werden kann.

Strom- und/oder Motorsteuerung können jeweils ganz oder teilweise in einer Servoelektronik des jeweiligen Antriebsmotors implementiert sein. Gleichermaßen kann die Strom- und/oder Motorsteuerung auch wenigstens teilweise zusammen mit der Robotersteuerung beispielsweise in einem Steuerschrank oder einem PC implementiert sein.

Man erkennt, dass der Steuer-Kommutierungswinkel $\delta$ gemäß dem Stromsteuerungs-Regelgesetz von dem (vorliegend konstanten) Antriebsmotordrehmoment $\tau_d$, der kommandierten Soll-Bestromung $I_{qd}$, $I_{dd}$ in dem mit dem Rotor 3 drehenden Bezugssystem und der Antriebs-Ist-Position $\varphi_1$ abhängt. Soll beispielsweise die Antriebs-Ist-Position $\varphi_1$ beibehalten werden, muss auch der Kommutierungswinkel $\delta$ bzw. die Orientierung des Statordrehfeldes beibehalten werden, wobei dessen Stärke bzw. die Amplitude der Ströme $I_a$, $I_b$ das konstante Antriebsmotordrehmoment $\tau_d$ bestimmen.

Nun vergleicht eine erfindungsgemäße Kommutierungswinkelbegrenzungseinrichtung 5, ob eine Änderungsrate des von der Motorsteuerung M kommandierten Steuer-Kommutierungswinkels einen vorgegebenen Grenzwert $\omega_{1,\,max}$ überschreitet, der beispielsweise einmalig vorab gemäß $\omega_{1,\,max}$ = C $\times$ d$\varphi_{1,\,max}$/dt aus einer Drehwinkelgeschwindigkeitsbegrenzung d$\varphi_{1,\,max}$/dt mit einer Proportionalitätskonstanten C bestimmt wurde, die den Kehrwert der Polpaarzahl des Antriebsmotors 1.1 enthält.

Ist dies nicht der Fall, i.e. überschreitet eine Änderungsrate d$\varphi_1$/dt des dem sich mit $\omega_1$ drehenden Statorfeldes folgender Rotor 3 den hierfür vorgegebene Grenzwert nicht, wird der Steuer-Kommutierungswinkel von der Stromsteuerung als Kommutierungswinkel vorgegeben und in einem Umrichter 6 pulsweitenmoduliert umgesetzt.

Ändert sich hingegen der kommandierte Steuer-Kommutierungswinkel rascher als der Grenzwert $\omega_{1,\,max}$ dies zulässt, i.e. würde das Statormagnetfeld sich zu schnell drehen, wenn die von der Motorsteuerung kommandierte Soll-Bestromung $I_{qd}$, $I_{dd}$ umgesetzt würde, so wird stattdessen beispielsweise der Kommutierungswinkel $\delta$ um einen vorgegebenen Betrag $\delta_0$ gegenüber dem Rotorwinkel verschoben als

$$\delta = \varphi_1 - \delta_0$$

vorgegeben. Auf diese Weise wird der Rotor 3 bei einem Überschreiten einer für ihn vorgegebenen Grenzgeschwindigkeit vom Antriebsmotor 1.1 nicht mehr weiter beschleunigt, sonder durch das hinterhereilende Statordrehfeld sogar gebremst.

Man erkennt, dass, solange die Geschwindigkeitsbegrenzung in der Stromsteuerung S eingehalten wird, das Antriebsmotordrehmoment $\tau_d$ zur Einstellung der kommandierten Antriebssollposition zur Verfügung steht, während bei einem Überschreiten der Geschwindigkeitsbegrenzung automatisch und ohne Verzögerung durch die Kaskadierung von Roboter-, Motor- und Stromsteuerung R, M bzw. S bremsend auf den Rotor 3 eingewirkt wird.

Anstelle der Verschiebung des Kommutierungswinkels gegenüber der Antriebs-Ist-Position $\varphi_1$ kann beispielsweise bei Überschreiten des Grenzwertes $\omega_{1,max}$ durch den Steuer-Kommutierungswinkel auch ein konstanter Kommutierungswinkel $\delta = const$ oder ein sich mit der maximal zulässigen Änderungsrate ändernder Kommutierungswinkel $\delta(t + \Delta t) = \delta(t) + \omega_{1,max} \times \Delta t$ vorgegeben werden, um ein Pendelantriebsmoment $\pm \tau_d$ zu bewirken.

Obgleich im vorstehenden Ausführungsbeispiel ein Grenzwerte für Geschwindigkeiten vorgegeben wurden, können in analoger Weise zusätzlich oder alternativ Grenzwerte für Beschleunigungen des Rotors und/oder Kommutierungswinkels und/oder für höhere Zeitableitungen vorgegeben werden.

Bezugszeichenliste

| | |
|---|---|
| 1.1 - 1.6 | Antriebsmotor (permanenterregter Synchronmotor) |
| 2 | Stator mit Drehfeldwicklung |
| 3 | Permanentmagnet-Rotor |
| 4 | Resolver |
| 5 | Kommutierungswinkelbegrenzungseinrichtung |
| 6 | Umrichter |
| 10 | Industrieroboter |
| | |
| $M_1$ | Motorsteuerung |
| R | Robotersteuerung |
| $S_1$ | Stromsteuerung |
| | |
| $I_U$, $I_V$, $I_W$, | Strom in Statorwicklung |
| $I_{dd}$, $I_{Vq}$ | Soll-Strom in Rotorfeldkoordinaten |
| $I_{ad}$, $I_{aq}$ | Soll-Strom in Statorkoordinaten |
| $\varphi_1$, $\varphi_2$,... | Ist-Position eines Antriebsmotors (Rotors) |
| $q_{1(d)}$, $q_{2(d)}$,... | Ist(Soll)-Position einer Bewegungsachse |
| $\delta$ | Kommutierungswinkel zwischen Statordrehfeld und inertialem Bezugssystem |

Patentansprüche

1. Verfahren zur Überwachung einer bewegungsgesteuerten Maschine, insbesondere eines Manipulators (10), mit einem elektronisch kommutierten Antriebsmotor (1.1 - 1.6), für den ein Kommutierungswinkel ($\delta$) auf Basis seiner erfassten Ist-Position ($\varphi_1$, $\varphi_2$,...) und einer Steuergröße, insbesondere einer vorgegebenen Soll-Position ($q_{1d}$, $q_{2d}$....) vorgegeben wird, mit dem Schritt:

   Vorgeben eines Grenzwertes für eine Änderungsrate, insbesondere eine Zeitableitung, der Ist-Position des Antriebesmotors;
   **dadurch gekennzeichnet, dass**
   der Kommutierungswinkel derart vorgegeben wird, dass eine Änderungsrate ($\omega_1 = d\delta_1/dt$) des Kommutierungswinkels einen Grenzwert ($\omega_{1,max}$) nicht überschreitet, wobei auf Basis der erfassten Antriebsmotor-Ist-Position und der vorgegebenen Steuergröße ein Steuer-Kommutierungswinkel oder eine Steuer-Kommutierungswinkeländerung bestimmt wird und , falls eine Änderungsrate des Steuer-Kommutierungswinkels bzw. der Steuer-Kommutierungswinkeländerung den Grenzwert für den Kommutierungswinkel überschreitet, ein konstanter Kommutierungswinkel vorgegeben wird oder
   ein gegenüber der erfassten Antriebsmotor-Ist-Position um einen vorgegebenen, insbesondere konstanten, Wert ($\delta_0$) verschobener Kommutierungswinkel vorgeben wird oder
   ein Kommutierungswinkel auf Basis eines Ist-Kommutierungswinkels und eines Maximaländerungswertes für den Kommutierungswinkel vorgeben wird

2. Verfahren nach dem vorhergehenden Anspruch, **dadurch gekennzeichnet, dass** der Kommutierungswinkel für eine vorgegebene, insbesondere konstante, Antriebskraft ($\tau_d$) des Antriebsmotors vorgegeben wird.

3. Verfahren nach einem der vorhergehenden Ansprüche, **dadurch gekennzeichnet, dass** eine Ist-Position ($\varphi_1$) des Antriebesmotors sensorgestützt (4) oder sensorlos erfasst wird.

**4.** Verfahren nach einem der vorhergehenden Ansprüche, **gekennzeichnet durch** eine Block-, Sinus- oder Feldkommutierung.

**5.** Verfahren nach einem der vorhergehenden Ansprüche, **dadurch gekennzeichnet, dass** eine Änderungsrate eine Geschwindigkeit und/oder Beschleunigung umfasst.

**6.** Vorrichtung (R, M, S) zur Überwachung einer bewegungsgesteuerten Maschine, insbesondere eines Manipulators (10), mit einem elektronisch kommutierten Antriebsmotor (1.1 - 1.6), **gekennzeichnet durch** eine Kommutierungswinkelbegrenzungseinrichtung (5) zur Durchführung eines Verfahrens nach einem der vorhergehenden Ansprüche.

**7.** Vorrichtung nach Anspruch 6, **gekennzeichnet durch** eine Maschinensteuerung (R) zur Vorgabe einer Steuergröße, insbesondere einer Soll-Position, für den Antriebsmotor, eine Motorsteuerung (M) zur Vorgabe eines Rotorfeldes, eine Stromsteuerung (S) zur Vorgabe eines Statorfeldes und/oder einen Umrichter (6) zur, insbesondere pulsweitenmodulierten, Ansteuerung einer Statorwicklung (2).

**8.** Computerprogrammprodukt mit Programmcode, der auf einem maschinenlesbaren Träger gespeichert ist und ein Verfahren nach einem der vorhergehenden Ansprüche 1 bis 5 ausführt, wenn es in einer Vorrichtung nach Anspruch 6 oder 7 abläuft.

**Claims**

**1.** A method of monitoring a motion-controlled machine, in particular a manipulator (10), having an electronically commutated drive motor (1.1 - 1.6), for which a commutation angle ($\delta$) is specified on the basis of its detected actual position ($\varphi_1$, $\varphi_2$, ...) and a control variable, in particular a specified target position ($q_{1d}$, $q_{2d}$, ...), the method comprising the step of:

specifying a threshold value for a rate of change, in particular a time derivative, of the actual position of the drive motor; **characterised in that** the commutation angle is specified in such a way that a rate of change ($\omega_1 = d\delta_1/dt$) of the commutation angle does not exceed a threshold value ($\omega_{1, max}$), wherein a control commutation angle or a control commutation angle change is determined on the basis of the detected actual position of the drive motor and the specified control variable, and, if a rate of change of the control commutation angle or of the control commutation angle change exceeds the threshold value for the commutation angle, a constant commutation angle is specified, or a commutation angle is specified which is shifted by a predetermined amount ($\delta_0$), in particular by a predetermined, constant amount ($\delta_0$), with respect to the detected actual position of the drive motor, or a commutation angle is specified on the basis of an actual commutation angle and a maximum amount of change for the commutation angle.

**2.** The method according to the preceding claim, **characterised in that** the commutation angle is specified for a predetermined drive force ($\tau_d$) of the drive motor, in particular for a predetermined, constant drive force ($\tau_d$) of the drive motor.

**3.** The method according to any one of the preceding claims, **characterised in that** an actual position ($\varphi_1$) of the drive motor is detected with the aid of a sensor (4) or without any sensors.

**4.** The method according to any one of the preceding claims, **characterised by** a block commutation, a sinusoidal commutation or a field commutation.

**5.** The method according to any one of the preceding claims, **characterised in that** a rate of change comprises a velocity and / or an acceleration.

**6.** A device (R, M, S) for monitoring a motion-controlled machine, in particular a manipulator (10), having an electronically commutated drive motor (1.1 - 1.6), **characterised by** a commutation angle limiting device (5) for carrying out a method in accordance with any one of the preceding claims.

**7.** The device according to claim 6, **characterised by** a machine controller (R) for specifying a control variable, in particular a target position, for the drive motor, a motor controller (M) for specifying a rotor field, a current controller (S) for specifying a stator field and / or a converter (6) for control of a stator winding (2), in particular for control of a stator winding (2) in a pulse width modulated manner.

**8.** A computer program product comprising a program code which is stored on a machine readable medium and which carries out a method in accordance with any one of the preceding claims 1 to 5 when it runs on a device according to claim 6 or 7.

**Revendications**

**1.** Procédé de surveillance d'une machine commandée par déplacement, en particulier d'un manipulateur (10), avec un moteur d'entraînement (1.1 - 1.6) commuté électroniquement, pour lequel un angle de commutation ($\delta$) est prédéfini sur la base de sa position réelle ($\varphi_1$, $\varphi_2$, ...) détectée et d'une grandeur de commande, en particulier d'une position de consigne ($q_{1d}$, $q_{2d}$, ...) prédéfinie, avec l'étape :

prédéfinition d'une valeur limite pour un taux de variation, en particulier une dérivée de temps, de la position réelle du moteur d'entraînement ; **caractérisé en ce que** l'angle de commutation est prédéfini de sorte qu'un taux de variation ($\omega_1 = d\delta_1/dt$) de l'angle de commutation ne dépasse pas une valeur limite ($\omega_{1, max}$), dans lequel un angle de commutation de commande ou une variation d'angle de commutation de commande est défini sur la base de la position réelle de moteur d'entraînement détectée et de la grandeur de commande prédéfinie et, si un taux de variation de l'angle de commutation de commande ou de la variation d'angle de commutation de commande dépasse la valeur limite pour l'angle de commutation, un angle de commutation constant est prédéfini ou un angle de commutation décalé par rapport à la position réelle de moteur d'entraînement détectée d'une valeur ($\delta_0$) prédéfinie, en particulier constante, est prédéfini ou un angle de commutation est prédéfini sur la base d'un angle de commutation réel et d'une valeur de variation maximum pour l'angle de commutation.

2. Procédé selon la revendication précédente, **caractérisé en ce que** l'angle de commutation est prédéfini pour une force d'entraînement ($\tau_d$) prédéfinie, en particulier constante, du moteur d'entraînement.

3. Procédé selon l'une quelconque des revendications précédentes, **caractérisé en ce qu'**une position réelle ($\varphi_1$) du moteur d'entraînement est détectée assistée par capteur (4) ou sans capteur.

4. Procédé selon l'une quelconque des revendications précédentes, **caractérisé par** une commutation en bloc, sinusoïdale ou de champ.

5. Procédé selon l'une quelconque des revendications précédentes, **caractérisé en ce qu'**un taux de variation comprend une vitesse et/ou accélération.

6. Dispositif (R, M, S) de surveillance d'une machine commandée par déplacement, en particulier d'un manipulateur (10), avec un moteur d'entraînement (1.1 - 1.6) commuté électroniquement, **caractérisé par** un dispositif de limitation d'angle de commutation (5) pour la réalisation d'un procédé selon l'une quelconque des revendications précédentes.

7. Dispositif selon la revendication 6, **caractérisé par** une commande de machine (R) pour la prédéfinition d'une grandeur de commande, en particulier d'une position de consigne, pour le moteur d'entraînement, une commande de moteur (M) pour la prédéfinition d'un champ de rotor, une commande de courant (S) pour la prédéfinition d'un champ de stator et/ou un convertisseur (6) pour l'amorçage, en particulier à modulation de largeur d'impulsions, d'un enroulement de stator (2).

8. Produit de programme informatique avec code de programme, qui est enregistré sur un support lisible par machine et exécute un procédé selon l'une quelconque des revendications précédentes 1 à 5, lorsqu'il se déroule dans un dispositif selon la revendication 6 ou 7.

# Fig. 1

# Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1734648 A1
- DE 10330551 B4
- DE 102007040560 A1
- EP 1589653 A2